# EUROPÄISCHE PATENTSCHRIFT

(11) **EP 3 452 768 B1**
(45) Veröffentlichungstag und Bekanntmachung des Hinweises auf die Patenterteilung: **07.04.2021**
(21) Anmeldenummer: 17765081.9
(22) Anmeldetag: 12.09.2017
(51) Int. Cl.: F25D 23/06

(54) **VAKUUMDÄMMKÖRPER**
VACUUM INSULATION BODY
ÉLÉMENT D'ISOLATION SOUS VIDE

(30) Priorität: 13.09.2016 DE 102016011085; 04.08.2017 DE 102017117733
(43) Veröffentlichungstag der Anmeldung: 13.03.2019
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: WINKLER, Andreas, 9773 Irschen (AT); HIEMEYER, Jochen, 97753 Karlstadt (DE)
(74) Vertreter: Herrmann, Uwe
(86) Internationale Anmeldenummer: PCT/EP2017/001078
(87) Internationale Veröffentlichungsnummer: WO 2018/050279

(56) Entgegenhaltungen:
- DE-A1- 3 319 146
- DE-A1- 4 320 544
- DE-A1-102015 008 123
- DE-A1-102015 008 157
- DE-A1-102015 008 160
- DE-A1-102015 008 162
- DE-T2- 60 105 036
- DE-U1- 8 913 435
- GB-A- 1 345 609
- JP-A- H04 210 197
- US-A1- 2006 118 168
- US-A1- 2015 044 412

## Beschreibung

Die vorliegende Erfindung betrifft einen Vakuumdämmkörper, umfassend wenigstens eine vakuumdichte Umhüllung, die zumindest einen evakuierten Bereich umgibt, wobei in dem evakuierten Bereich ein oder mehrere Kernmaterialien, wie beispielsweise Perlit, angeordnet sind.

Grundsätzlich besteht die Möglichkeit, derartige Vakuumdämmkörper innerhalb oder auch außerhalb einer Vakuumkammer zu evakuieren, wobei dem Verschluss der Evakuieröffnung des Vakuumdämmkörpers bei einem Evakuieren außerhalb einer Vakuumkammer besondere Bedeutung zukommt. Einerseits muss die Evakuieröffnung des Vakuumdämmkörpers beim Evakuiervorgang einen ausreichend großen Querschnitt zum zügigen Entlüften bzw. Evakuieren aufweisen, andererseits muss diese Öffnung nach dem erfolgten Evakuieren wieder zuverlässig und gasdicht verschlossen werden. Um eine typische Lebensdauer des Vakuumdämmkörpers zu erzielen, sollte die Gaseintragsrate in den fertigen, d.h. zum Einsatz kommenden Vakuumdämmkörpern im Bereich von 10⁻⁸ bis 10⁻⁷ mbar * l/s liegen.

Die vakuumdichte Umhüllung wird vorzugsweise teilweise oder insgesamt durch eine oder mehrere Hochbarrierefolien gebildet.

Aus dem Stand der Technik ist es bekannt, bei folienumhüllten Vakuumdämmkörpern mit einem Evakuierstutzen an die vakuumdichte Umhüllung bzw. an den Evakuierstutzen einen Folienschlauch anzusetzen, durch den während des Evakuiervorgangs ein Evakuierrohr geführt ist, das den nötigen Evakuierquerschnitt offenhält. Ist der Evakuiervorgang abgeschlossen, wird das Evakuierrohr aus dem Folienschlauch entfernt und dieser sodann thermisch versiegelt.

Des Weiteren ist es aus dem Bereich der metallumhüllten Vakuumdämmplatten bekannt, eine Evakuierung durch eine über der Evakuieröffnung aufgesetzte Saugglocke durchzuführen und die Evakuieröffnung nach erfolgtem Evakuiervorgang durch eine im Vakuumraum angebrachte Vorrichtung zu verschließen, bspw. durch einen Schweißvorgang.

JPH04210197 offenbart ein Vakuumdämmkörper gemäß dem Oberbegriff des Anspruchs 1.

Der vorliegenden Erfindung liegt die Aufgabe zugrunde, einen Vakuumdämmkörper der eingangs genannten Art dahingehend weiterzubilden, dass dieser auf vergleichsweise einfache Art und Weise evakuiert werden kann.

Diese Aufgabe wird durch einen Vakuumdämmkörper mit den Merkmalen des Anspruchs 1 gelöst.

Danach ist vorgesehen, dass die vakuumdichte Umhüllung zumindest eine Evakuieröffnung aufweist, die mit wenigstens einem Ventil mit zumindest einem Ventilteller versehen ist, der im geöffneten Zustand die Evakuieröffnung öffnet und der im geschlossenen Zustand die Evakuieröffnung freigibt, wobei außerhalb des Dichtbereiches des Ventiltellers Mittel zur vakuumdichten Versiegelung der Evakuieröffnung angeordnet sind.

Durch einen solchen Vakuumdämmkörper ist es möglich, dass der Evakuierstutzen des Vakuumdämmkörpers für die Zeit des Transfers zwischen verschiedenen Evakuierstationen oder für die Zeit zwischen zwei Evakuiervorgängen zumindest soweit gasdicht verschlossen ist, dass keine wesentlichen Gasmengen in das Innere des Vakuumdämmkörpers eindringen und somit dessen Wärmeleitfähigkeit signifikant erhöhen. Dieser Verschluss muss für den späteren bzw. einen weiteren Evakuierschritt möglichst wieder auf den vollen Querschnitt zu Öffnen sein. Hierzu dient der Ventilteller des Vakuumdämmkörpers, der zwischen einer geschlossenen und einer offenen Position hin und her bewegbar ist und für einen erneuten Evakuiervorgang geöffnet wird.

Ist der Ventilteller in der geschlossenen Position, kann der teilweise evakuierte Vakuumdämmkörper zu einer neuen Evakuierstation verbracht werden, ohne dass die Gefahr besteht, dass erhebliche Gasmengen in den Vakuumdämmkörper eindringen.

An dieser Stelle wird darauf hingewiesen, dass der Begriff "Ventilteller" jedes beliebige Element aufweist, das geeignet ist, eine Ventilöffnung bzw. den Evakuierstutzen zu schließen. Dabei kann der Ventilteller tellerförmig ausgebildet sein, jedoch ist von der Erfindung auch jede andere Formgebung umfasst. Typische Dichtheitsanforderungen gemäß der vorliegenden Erfindung an diesen intermediären (d.h. nicht endgültigen) Verschluss durch den Ventilteller liegen im Bereich einer Gaseintragsrate in den Vakuumdämmkörper im Bereich von 10⁻⁵ bis 10⁻³mbar * l/s.

Ist die Evakuierung des Vakuumdämmkörpers abgeschlossen, erfolgt die vakuumdichte Versiegelung (= Endversiegelung) um den Dichtbereich des Ventiltellers herum, so dass sichergestellt ist, dass nur noch sehr kleine Gaseintragsraten vorliegen bzw. nur noch sehr wenig Gas pro Zeiteinheit durch die Evakuieröffnung in den Vakuumdämmkörper eintritt. Die vakuumdichte Versiegelung kann bspw. durch das Zusammenwirken von mehreren Kunststoffschichten erfolgen, die bspw. durch eine Wärmeeinwirkung miteinander versiegelt werden.

Als Kunststoffe kommen bspw. Polyolefine und insbesondere Polyethylen in Betracht.

Wie bereits oben ausgeführt, muss auch der Ventilteller im geschlossenen Zustand des Ventils eine gewisse Dichtwirkung bereitstellen. Vorzugsweise ist daher vorgesehen, dass der Ventilteller im geschlossenen Zustand des Ventils mit wenigstens einem Ventilsitz zusammenwirkt, dessen Dichtmaterial eine Shore-Härte ≤ 80 Shore, vorzugsweise ≤ 40 Shore aufweist. Das Dichtmaterial kann alternativ oder zusätzlich auch am Ventilteller angeordnet sein.

In einer weiteren Ausgestaltung der Erfindung ist vorgesehen, dass der Ventilteller wenigstens ein magnetisches, insbesondere wenigstens ein ferromagnetisches Material aufweist, das angeordnet ist, so dass es mit wenigstens einem externen (d.h. nicht zum Vakuumdämmkörper gehörigen) Magneten, insbesondere Elektromagneten zusammenwirken kann. So ist es möglich, den Ventilteller durch das Aufbringen einer Magnetkraft zu bewegen. Dabei ist es insbesondere von Vorteil, wenn der Magnet bzw. Elektromagnet Bestandteil einer Saugglocke ist oder eines sonstigen Saugapparates, der dichtend um die Evakuieröffnung auf den Vakuumdämmkörper aufgesetzt wird.

In einer weiteren Ausgestaltung der Erfindung ist vorgesehen, dass der Ventilteller und/oder der Ventilsitz, mit dem der Ventilteller zusammenwirkt über wenigstens eine Zentrierhilfe verfügt, so dass sichergestellt ist, dass der Ventilteller korrekt in dem Ventilsitz angeordnet ist. Der Ventilteller und/oder der Ventilsitz können mit einer oder mehreren vorzugsweise umlaufenden Dichtmaterialien versehen sein, um zu bewirken, dass eine hinreichende Gasdichtigkeit bei geschlossenem Ventilteller vorliegt.

Der Ventilteller und/oder der Ventilsitz können insgesamt oder teilweise elastisch ausgebildet sein. Dies bringt den Vorteil mit sich, dass eine etwaige ungleichmäßige Formgebung des Ventiltellers oder des Ventilsitzes nicht zu einer Undichtigkeit führt, sondern durch die elastische Verformung des jeweils anderen Teils ausgeglichen wird. Wie bereits oben ausgeführt ist es von Vorteil, wenn der Ventilteller und/oder der Ventilsitz zumindest eine Dichtung insbesondere eine Flachdichtung aufweist, die das Ventil temporär, d.h. zwischen zwei Evakuiervorgängen abdichtet.

In einer weiteren Ausgestaltung der Erfindung ist vorgesehen, dass das Ventil im geschlossenen Zustand ohne vakuumdichte Versiegelung, d.h. vor der Endversiegelung, derart abdichtet, dass die Gaseintragsrate durch das Ventil im Bereich von 10⁻⁵ bis 10⁻³ mbar * l/s liegt.

Weiterhin kann vorgesehen sein, dass die Mittel zur vakuumdichten Versiegelung teilweise oder insgesamt durch eine oder mehrere gasdichte Folien, i insbesondere Hochbarrierefolien gebildet werden. Dabei ist es denkbar, dass eine der Folien Bestandteil des Ventils des Vakuumdämmkörpers ist und eine der Folien einen Bereich der äußeren Umhüllung des Vakuumdämmkörpers bildet. Ist ein hinreichendes Vakuumniveau innerhalb des Vakuumdämmkörpers erreicht, erfolgt die vakuumdichte Versiegelung, d.h. die Endversiegelung, um die Evakuieröffnung herum, so dass ein weiterer Gaseintrag durch die Evakuieröffnung hindurch verhindert bzw. verringert wird.

In einer weiteren Ausgestaltung der Erfindung ist vorgesehen, dass der Vakuumdämmkörper wenigstens ein stabiles Flächenelement aufweist, insbesondere ein Blechstück, das einerseits den Ventilsitz des Ventiltellers bildet oder einen Teilbereich davon und das andererseits als Auflage für den Schritt der vakuumdichten Versiegelung dient. Bei diesem Blechstück kann es sich somit um einen Teil des Vakuumdämmkörpers handeln, der auf seiner Außenseite von einer Folie, insbesondere von einer vakuumdichten Folie, wie beispielsweise von einer Hochbarrierefolie, überdeckt ist. Das Flächenelement kann derart ausgebildet sein, das das Ventil mit den das Ventil umgebenden Abschnitten bündig abschließt, wenn sich der Ventilteller in der geschlossenen Position befindet, so dass insgesamt eine ebene Fläche erzielt wird.

Die vorliegende Erfindung betrifft des Weiteren eine Anordnung, die wenigstens einen Vakuumdämmkörper nach einem der Ansprüche 1 bis 10 umfasst sowie wenigstens eine Saugglocke, die auf die Evakuieröffnung des Vakuumdämmkörpers aufgesetzt ist, wobei die Saugglocke dichtend im Bereich um die Evakuieröffnung auf den Vakuumdämmkörper aufliegt und wobei die Saugglocke wenigstens einen unter Vakuum stehenden Bereich aufweist, in dem zumindest ein Hubelement zum Öffnen des Ventils angeordnet ist. Somit kann das Innere des Vakuumdämmkörpers evakuiert werden, wobei ggf. das Hubelement oder ein sonstiges Element geeignet ist, das Ventil nach dem erfolgten Evakuiervorgang auch wieder zu schließen und wobei vorzugsweise vorgesehen ist, dass das Hubelement als Elektromagnet ausgeführt ist.

In dieser Ausführungsform der Erfindung dient die Saugglocke somit nicht nur zum Evakuieren des Vakuumdämmkörpers sondern hat gleichzeitig Einfluss auf den Zustand des Ventiltellers. Die Saugglocke weist ein oder mehrere Hubelemente, wie bspw. Elektromagnete auf, die im Betrieb bzw. je nach Betriebszustand den Ventilteller anheben und somit die Evakuieröffnung öffnen, so dass das Evakuieren des Vakuumdämmkörpers möglich ist. Anschließend kann ebenfalls durch den Elektromagnet oder schlicht durch das Abschalten des Elektromagneten ein Schließen des Ventils durch das Zurückbewegen des Ventiltellers auf den Ventilsitz erfolgen. Diese Bewegung kann bedingt oder unterstützt werden durch das in dem Vakuumdämmkörper bereits herrschende Vakuum.

Die vorliegende Erfindung betrifft des Weiteren ein Verfahren zum Evakuieren eines oder mehrerer Vakuumdämmkörper nach einem der Ansprüche 1 bis 10. Das Verfahren zeichnet sich dadurch aus, dass zum Zwecke des Evakuierens des Vakuumdämmkörpers wenigstens eine Saugglocke auf den Vakuumdämmkörper aufgesetzt wird, die den Bereich um den Ventilteller herum abdichtet, wobei die Saugglocke zumindest ein Hubelement aufweist, und wobei zum Zwecke des Evakuierens der Ventilteller angehoben und somit die Saugöffnung geöffnet wird und wobei nach dem Evakuieren der Ventilteller wieder auf die Evakuieröffnung abgesenkt wird. Dieses Absenken kann bspw. bedingt durch das in dem Vakuumdämmkörper befindliche Vakuum erfolgen oder auch bedingt durch den Elektromagneten oder ein sonstiges Hubelement.

Wie bereits oben ausgeführt, kann es möglich sein, dass das Hubelement durch einen Elektromagneten gebildet wird.

In einer weiteren Ausgestaltung der Erfindung ist vorgesehen, dass der Evakuiervorgang des Vakuumdämmkörpers vorzugsweise an einer oder mehreren Saugglocken sequentiell verläuft und dass beim Transfer des Vakuumdämmkörpers zwischen den Evakuierplätzen bzw. auch zwischen zwei Evakuiervorgängen ggf. an derselben Saugglocke die Evakuieröffnung des Vakuumdämmkörpers durch den Ventilteller verschlossen ist.

Die mehreren Evakuiervorgänge, die zeitlich nacheinander folgen, können grundsätzlich an unterschiedlichen Saugglocken oder auch an derselben Saugglocke durchgeführt werden. In beiden Fällen ist von Bedeutung, dass zwischen zwei Evakuiervorgängen eine gasdichte Abdichtung des Evakuierstutzens, d.h. der Evakuieröffnung durch den Ventilteller erfolgt.

Wie bereits oben ausgeführt, ist es von Vorteil, dass nach dem letzten Evakuiervorgang die vakuumdichte Versiegelung erfolgt, wobei die vakuumdichte Versiegelung vorzugsweise unter Vakuum stattfindet. Die im Rahmen der vorliegenden Erfindung genannte vakuumdichte Versiegelung kann auch als vakuumdichte Endversiegelung bezeichnet werden, da sie vorzugsweise den letzten Schritt des Evakuiervorgangs darstellt.

Die vorliegenden Erfindung ist stets dann vorteilhaft einsetzbar, wenn ein Vakuumdämmkörper nicht in einem Schritt evakuiert wird, sondern wenn mehrere Evakuierschritte erforderlich sind, um das gewünschte Endvakuum zu erreichen. Wir nehmen exemplarisch Bezug auf die in den deutschen Patentanmeldungen 10 2015 008 162.4, 10 2015 008 130.6 und 10 2015 008 159.4 beschriebenen Vorgehensweisen.

Die vorliegende Erfindung betrifft des Weiteren ein wärmeisoliertes Behältnis, vorzugsweise ein Kühl- und/oder Gefriergerät mit wenigstens einem temperierten und vorzugsweise gekühlten Innenraum und mit wenigstens einer dem temperierten und vorzugsweise gekühlten Innenraum wenigstens bereichsweise umgebenden Wandung, vorzugsweise Außenwandung, wobei sich zwischen dem temperierten und vorzugsweise gekühlten Innenraum und der Wandung zumindest ein Vakuumdämmkörper gemäß einem der Ansprüche 1 bis 10 befindet.

Vorzugsweise ist vorgesehen, dass außer dem oder den Vakuumdämmkörpern gemäß der Erfindung keine weitere Wärmedämmung vorliegt, dass es sich somit um ein Vollvakuumgerät bzw. -behältnis handelt.

Von der Erfindung sind jedoch auch Ausführungsformen umfasst, bei denen außer dem genannten Vakuumdämmkörper wenigstens ein weiteres Dämmmaterial vorhanden ist.

Der temperierte Innenraum ist je nach Art des Gerätes (Kühlgerät, Wärmeschrank etc.) entweder gekühlt oder beheizt. Wärmeisolierte Behältnisse im Sinne der vorliegenden Erfindung weisen mindestens einen temperierten Innenraum auf, wobei dieser gekühlt oder beheizt sein kann, so dass sich in dem Innenraum eine Temperatur unterhalb oder oberhalb der Umgebungstemperatur von z.B. 21 °C ergibt. Die Erfindung ist also nicht auf Kühl- und/oder Gefriergeräte beschränkt sondern betrifft allgemein Geräte mit einem temperierten Innenraum, beispielsweise auch Wärmeschränke oder Wärmetruhen.

In Bezug auf dieses erfindungsgemäße Behältnis stellt der erfindungsgemäße Vakuumdämmkörper vorzugsweise ein Vollvakuumsystem dar, welches im Raum zwischen der den Innenraum des Behältnisses bzw. Gerätes begrenzenden Innenwand und der Außenhaut des Behältnisses bzw. Gerätes angeordnet ist. Unter einem Vollvakuumsystem ist eine Wärmedämmung zu verstehen, die ausschließlich oder überwiegend aus einem evakuierten Bereich besteht, der mit einem Kernmaterial gefüllt ist. Die Begrenzung dieses Bereiches kann beispielsweise durch eine vakuumdichte Folie und vorzugsweise durch eine Hochbarrierefolie gebildet werden. Somit kann zwischen der Innenwand des Behältnisses, vorzugsweise Geräts und der Außenhaut des Behältnisses, vorzugsweise Gerätes, als Wärmedämmung ausschließlich ein solcher Folienkörper vorliegen, der einen durch eine vakuumdichte Folie umgebenen Bereich aufweist, in dem Vakuum herrscht und in dem ein Kernmaterial angeordnet ist. Eine Ausschäumung und/oder Vakuumisolationspaneele als Wärmedämmung oder eine sonstige Wärmedämmung außer dem Vollvakuumsystem zwischen der Innenseite und der Außenseite des Behältnisses bzw. Gerätes sind vorzugsweise nicht vorgesehen.

Diese bevorzugte Art der Wärmedämmung in Form eines Vollvakuumsystems kann sich zwischen der den Innenraum begrenzenden Wand und der Außenhaut des Korpus und/oder zwischen der Innenseite und der Außenseite des Verschlusselementes, wie z.B. einer Tür, Klappe, Deckel oder dergleichen erstrecken. Entsprechendes gilt für eine Ausführungsform, bei der außer der oder den Vakuumdämmkörpern weitere Wärmedämmmaterialien vorhanden sind.

Das Vollvakuumsystem kann so erhalten werden, dass eine Umhüllung aus einer gasdichten Folie mit einem Kernmaterial gefüllt und anschließend vakuumdicht versiegelt wird. In einer Ausführungsform erfolgt sowohl das Befüllen als auch das vakuumdichte Versiegeln der Umhüllung bei Normal- bzw. Umgebungsdruck. Die Evakuierung erfolgt dann durch Anschluss einer geeigneten in die Umhüllung eingearbeiteten Schnittstelle in Form des Evakuierungsstutzens, der ein Ventil aufweist, an dem eine Saugglocke bzw. Vakuumpumpe angeschlossen wird. Vorzugsweise herrscht während der Evakuierung außerhalb der Umhüllung Normal- bzw. Umgebungsdruck. Es ist in dieser Ausführungsform vorzugsweise zu keinem Zeitpunkt der Herstellung erforderlich, die Umhüllung in eine Vakuumkammer einzubringen. Insofern kann in einer Ausführungsform während der Herstellung der Vakuumdämmung auf eine Vakuumkammer verzichtet werden.

In einer Ausführungsform ist vorgesehen, dass es sich bei dem erfindungsgemäßen Behältnis um ein Kühl- und/oder Gefriergerät, insbesondere um ein Haushaltsgerät bzw. ein gewerbliches Kühlgerät handelt. Beispielsweise sind solche Geräte umfasst, die für eine stationäre Anordnung im Haushalt, in einem Hotelzimmer, in einer gewerblichen Küche oder in einer Bar konzipiert sind. Beispielsweise kann es sich auch um einen Weinkühlschrank handeln. Ferner sind auch Kühl- und/oder Gefriertruhen von der Erfindung umfasst. Die erfindungsgemäßen Geräte können eine Schnittstelle zur Anbindung an eine Stromversorgung, insbesondere an ein Haushaltsstromnetz (z.B. einen Stecker) und/oder eine Steh- oder Einbauhilfe wie beispielsweise Stellfüße oder Schnittstelle zur Fixierung innerhalb einer Möbelnische aufweisen. Beispielsweise kann es sich bei dem Gerät um ein Einbaugerät oder auch um ein Standgerät handeln.

Vorzugsweise ist das Behältnis bzw. das Gerät derart ausgebildet, dass es mit einer Wechselspannung, wie beispielsweise mit einer Hausnetzspannung von z.B. 120 V und 60 Hz oder 230 V und 50 Hz betrieben werden kann. In einer alternativen Ausführungsform ist denkbar, dass das Behältnis bzw. das Gerät derart ausgebildet, dass es mit Gleichstrom einer Spannung von beispielsweise 5 V, 12 V oder 24 V betrieben werden kann. In dieser Ausgestaltung kann vorgesehen sein, dass innerhalb oder außerhalb des Gerätes ein Steckernetzteil vorgesehen ist, über welches das Gerät betrieben wird. Ein Betrieb mit Gleichspannung kann insbesondere dann zur Anwendung kommen, wenn das Behältnis eine thermoelektrische Wärmepumpe zum Temperieren des Innenraums aufweist. Insbesondere kann vorgesehen sein, dass das Kühl- und/oder Gefriergerät eine schrankartige Gestalt hat und einen Nutzraum aufweist, der an seiner Vorderseite (im Falle einer Truhe an der Oberseite) für einen Benutzer zugänglich ist. Der Nutzraum kann in mehrere Kompartimente unterteilt sein, die alle bei derselben oder bei unterschiedlichen Temperaturen betrieben werden. Alternativ kann lediglich ein Kompartiment vorgesehen sein. Innerhalb des Nutzraumes bzw. eines Kompartiments können auch Lagerungshilfen wie beispielsweise Ablagefächer, Schubladen oder Flaschenhalter (im Falle einer Truhe auch Raumteiler) vorgesehen sein, um eine optimale Lagerung von Kühl- oder Gefriergütern und eine optimale Platzausnützung zu gewährleisten.

Der Nutzraum kann durch wenigstens eine um eine vertikale Achse schwenkbare Türe verschlossen sein. Im Falle einer Truhe ist eine um eine horizontale Achse schwenkbare Klappe oder ein Schiebedeckel als Verschlusselement denkbar. Die Türe oder ein sonstiges Verschlusselement kann im geschlossenen Zustand anhand einer umlaufenden Magnetdichtung mit dem Korpus im Wesentlichen luftdicht in Verbindung stehen. Vorzugsweise ist auch die Türe bzw. ein sonstiges Verschlusselement wärmeisoliert, wobei die Wärmeisolierung anhand einer Ausschäumung und ggf. anhand von Vakuumisolationspaneelen erreicht werden kann, oder auch vorzugsweise anhand eines Vakuumsystems und besonders bevorzugt anhand eines Vollvakuumsystems. An der Innenseite der Türe können ggf. Türabsteller vorgesehen sein, um auch dort Kühlgüter lagern zu können.

In einer Ausführungsform kann es sich um ein Kleingerät handeln. In derartigen Geräten weist der Nutzraum, der durch die Innenwand des Behälters definiert ist, beispielsweise ein Volumen von kleiner 0,5 m³, kleiner 0,4 m³ oder kleiner 0,3 m³ auf. Die Außenabmessungen des Behälters bzw. Gerätes liegen vorzugsweise im Bereich bis 1 m hinsichtlich der Höhe, der Breite und der Tiefe.

Unter einer vakuumdichten oder diffusionsdichten Umhüllung bzw. unter einer vakuumdichten oder diffusionsdichten Verbindung bzw. unter dem Begriff Hochbarrierefolie wird vorzugsweise eine Umhüllung bzw. eine Verbindung bzw. eine Folie verstanden, mittels derer der Gaseintrag in den Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %.

Vorzugsweise ist die flächenspezifische Gasdurchgangsrate der Umhüllung bzw. der Verbindung bzw. der Hochbarrierefolie < 10⁻⁵ mbar * I / s *m² und besonders bevorzugt < 10⁻⁶ mbar * l / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugweise im Bereich von < 10⁻² mbar * l / s * m² und besonders bevorzugt im Bereich von < 10⁻³ mbar * l / s * m² (gemessen nach ASTM F-1249-90). Vorzugsweise werden durch diese geringen Gasdurchgangsraten die vorgenannten geringen Anstiege der Wärmeleitfähigkeit erreicht.

Ein aus dem Bereich der Vakuumpaneele bekanntes Hüllsystem sind sogenannte Hochbarrierefolien. Darunter werden im Rahmen der vorliegenden Erfindung vorzugsweise Ein- oder Mehrschichtfolien (die vorzugsweise siegelfähig sind) mit einer oder mehreren Barriereschichten (typischerweise metallische Schichten oder Oxid-Schichten, wobei als Metall oder Oxid vorzugsweise Aluminium bzw. ein Aluminiumoxid Verwendung findet) verstanden, die den oben genannten Anforderungen (Anstieg der Wärmeleitfähigkeit und/oder flächenspezifische Gasdurchgangsrate) als Barriere gegen den Gaseintrag genügen.

Bei den oben genannten Werten bzw. bei dem Aufbau der Hochbarrierefolie handelt es sich um exemplarische, bevorzugte Angaben, die die Erfindung nicht beschränken.

Weitere Einzelheiten und Vorteile der Erfindung werden anhand eines in der Zeichnung dargestellten Ausführungsbeispiels näher erläutert. Es zeigen:
- Figur 1:: eine Schnittansicht durch einen Vakuumdämmkörper gemäß der Erfindung im Bereich der Evakuieröffnung,
- Figur 2:: eine Schnittansicht gemäß Figur 1 mit aufgesetzter Saugglocke,
- Figur 3:: eine Schnittansicht durch die Evakuieröffnung mit eingesetztem Ventilteller und
- Figur 4:: eine Schnittansicht durch den Vakuumdämmkörper im Bereich der Evakuieröffnung mit aufgesetzter Saugglocke.

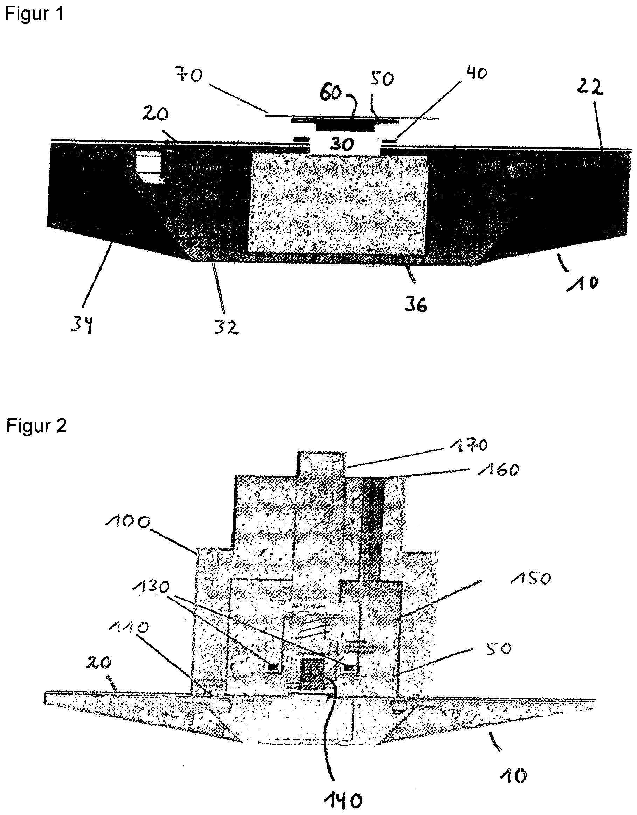

Figur 1 zeigt mit dem Bezugszeichen 10 einen Vakuumdämmkörper gemäß der vorliegenden Erfindung.

Der Vakuumdämmkörper 10 umfasst ein Kernmaterial, wie bspw. Perlit, das als Stützmaterial für den evakuierten Zustand dient. Dieses Kernmaterial ist von einer vakuumdichten Umhüllung, vorzugsweise von einer Hochbarrierefolie 20 umgeben, die verhindert, dass Gas in unzulässig hohem Maße in den Vakuumdämmkörper eintritt. Das Bezugszeichen kann ein doppelseitiges Folienpatch bilden.

Das Bezugszeichen 30 kennzeichnet eine Öffnung im Folienmaterial des Vakuumdämmkörpers, d.h. die Evakuieröffnung. Unterhalb der Evakuieröffnung, innerhalb des Vakuumdämmkörpers befindet sich die sogenannte Sorptionspumpe, d.h. eine Anordnung aus einem primären Strömungsverteiler 32 und gasabsorbierendem Material wie bspw. Zeolith 34.

Der Strömungsverteiler hat die Aufgabe, die Strömung innerhalb des Vakuumdämmkörpers beim Evakuiervorgang so zu gestalten, dass möglichst viele Bereiche gleichmäßig evakuiert werden können bzw. die Strömung zu der Evakuieröffnung hin zu fördern. Der Zeolith 34 hat die Aufgabe, Moleküle wie bspw. Wasser zu adsorbieren.

Das Folienmaterial 20 ist ein doppelseitiges Folienpatch dieser Sorptionspumpe 36 und kann wie ausgeführt als Hochbarrierefolie ausgeführt sein. Es kann sich dabei um das gleiche Folienmaterial handeln, wie die eigentliche vakuumdichte Umhüllung des Vakuumdämmkörpers oder auch um eine andere Folie.

Das Bezugszeichen 22 kennzeichnet ein Blechteil der Sorptionspumpe, das sich wie aus Figur 1 ersichtlich unterhalb, d.h. zur Innenseite hin gerichtet, im Vakuumdämmkörper befindet. Mit dem Bezugszeichen 40 ist eine Flachdichtung gekennzeichnet, die für die Abdichtung bei geschlossenem Ventilteller sorgt. Der Ventilteller ist mit dem Bezugszeichen 50 und dessen Eisenkern mit dem Bezugszeichen 60 gekennzeichnet. Auf der Oberseite des Ventiltellers 50 befindet sich ein Folienpatch 70, das zum Zwecke der Endversiegelung mit dem Folienpatch 20 der Sorptionspumpe 36 versiegelt wird.

Der Ventilteller 50 ist zwischen zwei unterschiedlichen Positionen hin und her bewegbar. In der dargestellten Position gemäß Figur 1 öffnet er die Evakuieröffnung, so dass ein Evakuiervorgang durchgeführt werden kann.

Der Zustand des Evakuierens ergibt sich aus Figur 2. In diesem Zustand ist die Saugglocke 100 auf die Folie 20 bzw. außen auf dem Vakuumdämmkörper aufgesetzt.

Über Dichtungen bzw. über wenigstens eine umlaufende Dichtung 110 (z.B. O-Ring-Dichtung) wird erreicht, dass die Saugglocke den Bereich um die Evakuieröffnung 30 abdichtet.

Mit dem Bezugszeichen 130 sind (ggf. dauer-) beheizte Mittel zur Endabsiegelung mit integriertem Ausgleichsmaterial gekennzeichnet, die benötigt werden, wenn der Evakuiervorgang abgeschlossen ist. Das Bezugszeichen 140 kennzeichnet einen Elektromagneten der Saugglocke 100, der betätigt wird, um den Ventilteller 50 zu Öffnen und zu Schließen. In dem hier dargestellten Zustand befindet sich der Ventilteller 50 im geöffneten Zustand.

Das Bezugszeichen 150 kennzeichnet allgemein den Öffner zum Öffnen des Ventiltellers. Das Bezugszeichen 160 kennzeichnet den Vakuumanschluss und mit 170 ist die Vakuumdurchführung mit integrierten Leitungen gekennzeichnet.

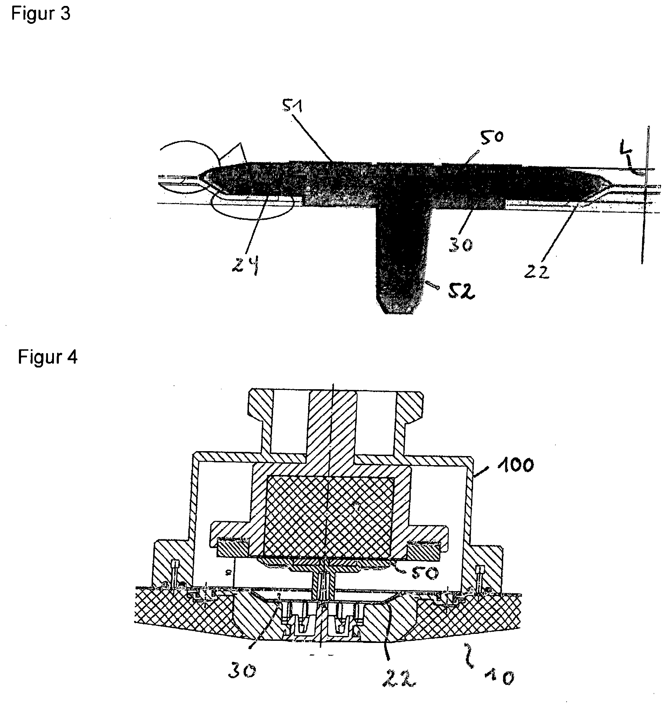

Figur 3 zeigt den Ventilteller 50 im geschlossenen Zustand.

Wie dies aus Figur 3 hervorgeht, weist das Blechteil 22 im Bereich des Ventiltellers, d.h. im Ventilsitz, eine Vertiefung auf, d.h. ist tiefgezogen, so dass der Ventilteller im geschlossenen Zustand nur unwesentlich über die Oberseite der Sorptionspumpe übersteht. Der Ventilteller kann bspw. aus Kunststoff bestehen bzw. einem z.B. 2 mm dicken Kunststoffdeckel 51 aufweisen und weist mittig einen Zentrierstift 52 auf, der sicherstellt, dass der Ventilteller 50 korrekt eingesetzt wird. Das Bezugszeichen 24 kennzeichnet eine Dichtung im Bereich des Ventilsitzes, die z.B. eine Höhe von 1 mm aufweisen kann.

Das Bezugszeichen 30 kennzeichnet einen Eisenkern, der durch den Elektromagneten der Sorptionspumpe 100 betätigt wird.

Der Überstand des Ventildeckels über die Oberseite des Vakuumdämmkörpers ist mit L bezeichnet und beträgt beispielsweise 1,5 mm.

Die Bereiche, die hinsichtlich einer Faltenbildung beim Siegeln bzw. Abdichten von besonderer Bedeutung sind, sind eingekreist.

Figur 4 zeigt schließlich den Ventilteller 50 im geöffneten Zustand mit der Saugglocke 100 und dem oberen Bereich des Vakuumdämmkörpers.

In sämtlichen Figuren sind gleiche oder funktionsgleiche Teile mit denselben Bezugszeichen versehen.

## Patentansprüche

1. Vakuumdämmkörper (10), umfassend:
eine vakuumdichte Umhüllung (20), die einen evakuierten Bereich umgibt, in dem ein oder mehrere Kernmaterialien (34) angeordnet sind, wobei
die vakuumdichte Umhüllung (20) eine Evakuieröffnung (30) aufweist, die mit einem Ventil versehen ist, das einen Ventilteller (50) umfasst, und
der Ventilteller (50) im geöffneten Zustand die Evakuieröffnung (30) öffnet und im geschlossenen Zustand die Evakuieröffnung (30) verschließt,
**dadurch gekennzeichnet, dass**
außerhalb des Dichtbereichs des Ventiltellers (50) Mittel (70) zur vakuumdichten thermischen Versiegelung der Evakuieröffnung (30) angeordnet sind.

2. Vakuumdämmkörper (10) nach Anspruch 1, **dadurch gekennzeichnet, dass** die Mittel (70) zur vakuumdichten thermischen Versiegelung durch eine oder mehrere Kunststoffschichten gebildet werden und/oder dass die vakuumdichte thermische Versiegelung derart ausgebildet ist, dass die Gaseintragsrate durch die Evakuieröffnung (30) im vakuumdicht versiegelten Zustand im Bereich ≤ 10⁻⁸ - 10⁻⁶ mbar * l /s liegt, wobei es sich vorzugsweise bei dem Kunststoff um ein Polyolefin und insbesondere um ein Polyethylen handelt.

3. Vakuumdämmkörper (10) nach einem der vorhergehenden Ansprüche, **dadurch gekennzeichnet, dass** der Ventilteller (50) im geschlossenen Zustand des Ventils mit einem Ventilsitz zusammenwirkt, dessen Dichtmaterial eine Shore-Härte ≤ 80 Shore, vorzugsweise ≤ 40 Shore aufweist.

4. Vakuumdämmkörper (10) nach einem der vorhergehenden Ansprüche, **dadurch gekennzeichnet, dass** der Ventilteller (50) wenigstens ein magnetisches, insbesondere ein ferromagnetisches Material aufweist, das so angeordnet ist, dass es mit wenigstens einem externen Magneten, insbesondere Elektromagneten zusammenwirken kann.

5. Vakuumdämmkörper (10) nach einem der vorhergehenden Ansprüche, **dadurch gekennzeichnet, dass** der Ventilteller (50) und/oder der Ventilsitz, der bei geschlossenem Ventil mit dem Ventilteller (50) zusammenwirkt, über wenigstens eine Zentrierhilfe verfügt.

6. Vakuumdämmkörper (10) nach einem der vorhergehenden Ansprüche, **dadurch gekennzeichnet, dass** der Ventilteller (50) und/oder der Ventilsitz, der bei geschlossenem Ventil mit dem Ventilteller (50) zusammenwirkt, insgesamt oder teilweise elastisch ausgebildet ist, wobei vorzugsweise vorgesehen ist, dass der Ventilteller (50) und/oder der Ventilsitz zumindest eine Dichtung, insbesondere eine Flachdichtung aufweist, die das Ventil abdichtet.

7. Vakuumdämmkörper (10) nach einem der vorhergehenden Ansprüche, **dadurch gekennzeichnet, dass** das Ventil im geschlossenen Zustand ohne vakuumdichte Versiegelung derart abdichtet, dass die Gaseintragsrate durch das Ventil im Bereich ≤ 10⁻⁵ - 10⁻³ mbar *l /s liegt.

8. Vakuumdämmkörper (10) nach einem der vorhergehenden Ansprüche, **dadurch gekennzeichnet, dass** die Mittel (70) zur vakuumdichten thermischen Versiegelung teilweise oder insgesamt durch eine oder mehrere Hochbarrierefolien gebildet werden.

9. Vakuumdämmkörper (10) nach einem der vorhergehenden Ansprüche, **dadurch gekennzeichnet, dass** der Vakuumdämmkörper (10) wenigstens ein stabiles Flächenelement, insbesondere ein Blechstück, aufweist, das einerseits den Ventilsitz des Ventiltellers (50) bildet und das andererseits als Auflage für den Schritt der vakuumdichten Versiegelung dient.

10. Vakuumdämmkörper (10) nach Anspruch 8, **dadurch gekennzeichnet, dass** das Flächenelement derart ausgebildet ist, dass das Ventil mit dem das Ventil umgebenden Abschnitten bündig abschließt und im geschlossenen Zustand insgesamt eine ebene Fläche bildet.

11. Anordnung umfassend wenigstens einen Vakuumdämmkörper (10) nach einem der Ansprüche 1 bis 10 sowie wenigstens eine Saugglocke (100), die auf die Evakuieröffnung (30) des Vakuumdämmkörpers (10) aufgesetzt ist, wobei die Saugglocke (100) dichtend im Bereich um die Evakuieröffnung (30) auf dem Vakuumdämmkörper (10) aufliegt und wobei die Saugglocke (100) wenigstens einen unter Vakuum stehenden Bereich aufweist, in dem zumindest ein Hubelement (140) zum Öffnen des Ventils angeordnet ist, so dass das Innere des Vakuumdämmkörpers (10) evakuiert werden kann, wobei das Hubelement (140) oder ein sonstiges Element geeignet ist, das Ventil nach dem erfolgten Evakuiervorgang wieder zu schließen, und wobei vorzugsweise vorgesehen ist, dass das Hubelement (140) als Elektromagnet ausgeführt ist.

12. Verfahren zum Evakuieren eines oder mehrerer Vakuumdämmkörper (10) wobei ein oder mehrerer Vakuumdämmkörper (10) gemäß einem der Ansprüche 1 bis 10 vorgesehen sind, **dadurch gekennzeichnet, dass** zum Zwecke des Evakuierens des Vakuumdämmkörpers (10) wenigstens eine Saugglocke (100) auf den Vakuumdämmkörper (10) aufgesetzt wird, die den Bereich um den Ventilteller (50) herum abdichtet, wobei die Saugglocke (100) zumindest ein Hubelement (140) aufweist, und wobei zum Zwecke des Evakuierens der Ventilteller (50) angehoben und somit die Evakuieröffnung (30) geöffnet wird und wobei nach dem Evakuieren der Ventilteller (50) wieder auf die Evakuieröffnung (30) abgesenkt wird, wobei vorzugsweise. der Ventilteller (50) durch wenigstens einen Elektromagneten der Saugglocke (100) bewegt wird.

13. Verfahren nach Anspruch 12, **dadurch gekennzeichnet, dass** der Evakuiervorgang des Vakuumdämmkörpers (10) vorzugsweise an einer oder mehreren Saugglocken (100) sequentiell verläuft und dass beim Transfer des Vakuumdämmkörpers (10) zwischen den Evakuierplätzen bzw. zwischen zwei Evakuiervorgängen die Evakuieröffnung (30) des Vakuumdämmkörpers (10) durch den Ventilteller (50) verschlossen ist.

14. Verfahren nach einem der Ansprüche 12 bis 13, **dadurch gekennzeichnet, dass** nach dem letzten Evakuiervorgang die vakuumdichte thermische Versiegelung erfolgt, wobei die vakuumdichte Versiegelung unter Vakuum erfolgt.

15. Wärmeisoliertes Behältnis, vorzugsweise ein Kühl- und/oder Gefriergerät mit wenigstens einem temperierten und vorzugsweise gekühlten Innenraum und mit wenigstens einer den temperierten und vorzugsweise gekühlten Innenraum wenigstens bereichsweise umgebenen Wandung, wobei sich zwischen dem temperierten und vorzugsweise gekühlten Innenraum und der Wandung wenigstens ein Vakuumdämmkörper (10) gemäß einem der Ansprüche 1 bis 10 befindet, und wobei sich vorzugsweise außer dem Vakuumdämmkörper (10) keine weitere Wärmedämmung zwischen dem Innenraum und der Wandung vorliegt.

## Claims

1. A vacuum insulation body (10), comprising:
a vacuum-tight covering (20) that surrounds an evacuated region in which one or more core materials (34) are arranged, wherein
the vacuum-tight covering (20) has an evacuation opening (30) that is provided with a valve that comprises a valve disk (50), and
the valve disk (50) opens the evacuation opening (30) in the opened state and closes the evacuation opening (30) in the closed state,
**characterized in that**
means (70) for a vacuum-tight thermal sealing of the evacuation opening (30) are arranged outside the sealing region of the valve disk (50).

2. The vacuum insulation body (10) in accordance with claim 1, **characterized in that** the means (70) for the vacuum-tight thermal sealing are formed by one or more plastic layers and/or **in that** the vacuum-tight thermal sealing is configured such that the gas introduction rate through the evacuation opening (30) is in the range ≤ 10⁻⁸ - 10⁻⁶ mbar * l /s in the state with a vacuum-tight seal, wherein the plastic preferably is a polyolefin and in particular a polyethylene.

3. The vacuum insulation body (10) in accordance with one of the preceding claims, **characterized in that** the valve disk (50) in the closed state of the valve cooperates with a valve seat whose sealing material has a Shore hardness ≤ 80 Shore, preferably ≤ 40 Shore.

4. The vacuum insulation body (10) in accordance with one of the preceding claims, **characterized in that** the valve disk (50) has at least one magnetic, in particular ferromagnetic, material that is arranged such that it can cooperate with at least one external magnet, in particular an electromagnet.

5. The vacuum insulation body (10) in accordance with one of the preceding claims, **characterized in that** the valve disk (50) and/or the valve seat, which cooperates with the valve disk (50) when the valve is closed, is/are provided with at least one centering aid.

6. The vacuum insulation body (10) in accordance with one of the preceding claims, **characterized in that** the valve disk (50) and/or the valve seat, which cooperates with the valve disk (50) when the valve is closed, is/are totally or partially elastic, with provision preferably being made that the valve disk (50) and/or the valve seat has/have at least one seal, in particular a flat seal, that seals the valve.

7. The vacuum insulation body (10) in accordance with one of the preceding claims, **characterized in that** the valve seals without a vacuum-tight sealing in the closed state such that the gas introduction rate through the valve is in the range ≤ 10⁻⁵ - 10⁻³ mbar *l /s.

8. The vacuum insulation body (10) in accordance with one of the preceding claims, **characterized in that** the means (70) for the vacuum-tight thermal sealing are formed in part or in full by one or more high barrier films.

9. The vacuum insulation body (10) in accordance with one of the preceding claims, **characterized in that** the vacuum insulation body (10) has at least one stable area element, in particular a piece of sheet metal, that forms the valve seat of the valve disk (50), on the one hand, and that serves as a support for the step of the vacuum-tight sealing, on the other hand.

10. The vacuum insulation body (10) in accordance with claim 8, **characterized in that** the area element is configured such that the valve terminates flush with the sections surrounding the valve and forms a planar surface overall in the closed state.

11. An arrangement comprising at least one vacuum insulation body (10) in accordance with one of the claims 1 to 10 and at least one suction cup (100) that is placed onto the evacuation opening (30) of the vacuum insulation body (10), wherein the suction cup (100) lies sealingly on the vacuum insulation body (10) in the region around the evacuation opening (30), and wherein the suction cup (100) has at least one region under a vacuum in which at least one lifting element (140) is arranged to open the valve such that the interior of the vacuum insulation body (10) can be evacuated, with the lifting element (140) or another element being suitable to close the valve again after the evacuation process has taken place, and with provision preferably being made that the lifting element (140) is designed as an electromagnet.

12. A method of evacuating one or more vacuum insulation bodies (10), wherein one or more vacuum insulation bodies (10) in accordance with one of the claims 1 to 10 are provided, **characterized in that** at least one suction cup (100) is placed onto the vacuum insulation body (10) for the purpose of evacuating the vacuum insulation body (10), which seals the region around the valve disk (50), wherein the suction cup (100) has at least one lifting element (140), and wherein the valve disk (50) is raised for the purpose of evacuation and the evacuation opening (30) thus is opened, and wherein after evacuation the valve disk (50) is again lowered onto the evacuation opening (30), wherein preferably the valve disk (50) is moved by at least one electromagnet of the suction cup (100).

13. The method in accordance with claim 12, **characterized in that** the evacuation process of the vacuum insulation body (10) preferably runs sequentially at one or more suction cups (100), and **in that** the evacuation opening (30) of the vacuum insulation body (10) is closed by the valve disk (50) on the transfer of the vacuum insulation body (10) between the evacuation stations or between two evacuation processes.

14. The method in accordance with one of the claims 12 to 13, **characterized in that** the vacuum-tight thermal sealing takes place after the last evacuation process, with the vacuum-tight sealing preferably taking place in a vacuum.

15. A thermally insulated container, preferably a refrigerator unit and/or freezer unit comprising at least one temperature-controlled and preferably cooled inner space and comprising at least one wall at least regionally surrounding the temperature-controlled and preferably cooled inner space, wherein at least one vacuum insulation body (10) in accordance with one of the claims 1 to 10 is located between the temperature-controlled and preferably cooled inner space and the wall, and wherein preferably no further thermal insulation is present between the inner space and the wall except for the vacuum insulation body (10).

## Revendications

1. Corps d'isolation sous vide (10), comprenant :
une enveloppe étanche au vide (20) entourant une zone évacuée, dans laquelle sont disposés un ou plusieurs matériaux de noyau (34), dans laquelle
l'enveloppe étanche au vide (20) comporte une ouverture d'évacuation (30) qui est prévue d'une soupape, qui comprend un disque de soupape (50), et
le disque de soupape (50) ouvre l'ouverture d'évacuation (30) à l'état ouvert et ferme l'ouverture d'évacuation (30) à l'état fermé,
**caractérisé en ce que**
des moyens (70) pour le scellement thermique étanche au vide de l'ouverture d'évacuation (30) sont disposés en dehors de la zone de scellement du disque de soupape (50).

2. Corps d'isolation sous vide (10) selon la revendication 1, **caractérisé en ce que** les moyens (70) pour le scellement thermique étanche au vide sont formés par une ou plusieurs couches de matière plastique et/ou **en ce que** le scellement thermique étanche au vide est conçu de telle manière que le débit d'entrée de gaz à travers l'ouverture d'évacuation (30) à l'état scellé étanche au vide se situe dans la plage ≤ 10⁻⁸ - 10⁻⁶ mbar * l /s, la matière plastique étant de préférence une polyoléfine et en particulier un polyéthylène.

3. Corps d'isolation sous vide (10) selon l'une quelconque des revendications précédentes, **caractérisé en ce que**, à l'état fermé de la soupape, le disque de soupape (50) coopère avec un siège de soupape dont le matériau de scellement présente une dureté Shore ≤ 80 Shore, de préférence ≤ 40 Shore.

4. Corps d'isolation sous vide (10) selon l'une quelconque des revendications précédentes, **caractérisé en ce que** le disque de soupape (50) comprend au moins un matériau magnétique, en particulier un matériau ferromagnétique, agencé pour coopérer avec au moins un aimant externe, en particulier un électro-aimant.

5. Corps d'isolation sous vide (10) selon l'une quelconque des revendications précédentes, **caractérisé en ce que** le disque de soupape (50) et/ou le siège de soupape, qui coopère avec le disque de soupape (50) lorsque la soupape est fermée, est prévu d'au moins un auxiliaire de centrage.

6. Corps d'isolation sous vide (10) selon l'une quelconque des revendications précédentes, **caractérisé en ce que** le disque de soupape (50) et/ou le siège de soupape, qui coopère avec le disque de soupape (50) lorsque la soupape est fermée, est conçu pour être entièrement ou partiellement élastique, il étant de préférence prévu que le disque de soupape (50) et/ou le siège de soupape présente au moins un joint d'étanchéité, en particulier un joint d'étanchéité plat, qui scelle la soupape.

7. Corps d'isolation sous vide (10) selon l'une quelconque des revendications précédentes, **caractérisé en ce que** la soupape est étanche à l'état fermé sans scellement étanche au vide de telle sorte que le débit d'entrée de gaz à travers la soupape se situe dans la plage ≤ 10⁻⁵ - 10⁻³ mbar *l /s.

8. Corps d'isolation sous vide (10) selon l'une quelconque des revendications précédentes, **caractérisé en ce que** les moyens (70) de scellement thermique étanche au vide sont partiellement ou totalement formés par un ou plusieurs films à haute barrière.

9. Corps d'isolation sous vide (10) selon l'une quelconque des revendications précédentes, **caractérisé en ce que** le corps d'isolation sous vide (10) présente au moins un élément de surface stable, en particulier une pièce de tôle, qui d'une part forme le siège de soupape du disque de soupape (50) et qui d'autre part sert de support pour l'étape de scellement étanche au vide.

10. Corps d'isolation sous vide (10) selon la revendication 8, **caractérisé en ce que** l'élément de surface est formé de telle sorte que la soupape affleure les parties entourant la soupape et forme une surface plane dans son ensemble à l'état fermé.

11. Agencement comprenant au moins un corps d'isolation sous vide (10) selon l'une quelconque des revendications 1 à 10 et au moins une ventouse (100), qui est placée sur l'ouverture d'évacuation (30) du corps d'isolation sous vide (10), dans lequel la ventouse (100) repose de manière étanche sur le corps d'isolation sous vide (10) dans la zone autour de l'ouverture d'évacuation (30) et dans lequel la ventouse (100) présente au moins une zone sous vide dans lequel est disposé au moins un élément de levage (140) pour ouvrir la soupape, de sorte que l'intérieur du corps d'isolation sous vide (10) puisse être évacué, l'élément de levage (140) ou un autre élément étant approprié pour refermer la soupape après le processus d'évacuation, et il est prévu de préférence que l'élément de levage (140) soit conçu comme un électro-aimant.

12. Procédé d'évacuation d'un ou de plusieurs corps d'isolation sous vide (10), dans lequel un ou plusieurs corps d'isolation sous vide (10) selon l'une quelconque des revendications 1 à 10 sont prévus, **caractérisé en ce que** pour l'évacuation du corps d'isolation sous vide (10) au moins une ventouse (100) est placée sur le corps d'isolation sous vide (10), laquelle ventouse (100) scelle la zone autour du disque de soupape (50), dans lequel la ventouse (100) présente au moins un élément de levage (140), et dans lequel, pour l'évacuation, le disque de soupape (50) est soulevé et ainsi l'ouverture d'évacuation (30) est ouverte, et dans lequel, après l'évacuation, le disque de soupape (50) est à nouveau abaissé sur l'ouverture d'évacuation (30), le disque de soupape (50) de préférence étant déplacé par au moins un électro-aimant de la ventouse (100).

13. Procédé selon la revendication 12, **caractérisé en ce que** le processus d'évacuation du corps d'isolation sous vide (10) se déroule de préférence de manière séquentielle au niveau d'une ou plusieurs ventouses (100) et **en ce que** pendant le transfert du corps d'isolation sous vide (10) entre les lieux d'évacuation ou entre deux processus d'évacuation, l'ouverture d'évacuation (30) du corps d'isolation sous vide (10) est fermée par le disque de soupape (50).

14. Procédé selon l'une quelconque des revendications 12 à 13, **caractérisé en ce que** le scellement thermique étanche au vide est effectué après le processus final d'évacuation, le scellement étanche au vide étant effectué sous vide.

15. Contenant à isolation thermique, de préférence un réfrigérateur et/ou un congélateur, avec au moins un espace intérieur à température contrôlée et de préférence refroidi et avec au moins une paroi entourant au moins partiellement l'espace intérieur à température contrôlée et de préférence refroidi, dans lequel au moins un corps d'isolation sous vide (10) selon l'une quelconque des revendications 1 à 10 est disposé entre l'espace intérieur à température contrôlée et de préférence refroidi et la paroi, et dans lequel de préférence, sauf le corps d'isolation sous vide (10), il n'y a pas d'autre isolation thermique entre l'espace intérieur et la paroi.
